# EUROPÄISCHE PATENTANMELDUNG

(11) **EP 4 148 301 A1**
(43) Veröffentlichungstag der Anmeldung: **15.03.2023**
(21) Anmeldenummer: 22193888.9
(22) Anmeldetag: 05.09.2022
(51) Int. Cl.: F16H 61/452, B60K 17/356, F16H 61/456

(54) **VERFAHREN ZUR STEUERUNG EINES MEHRMOTOREN SYSTEMS**

(30) Priorität: 14.09.2021 DE 102021210154
(71) Anmelder: Robert Bosch GmbH, 70442 Stuttgart (DE)
(72) Erfinder: Mueller, Matthias, 89129 Langenau (DE); Herrmann, Ronny, 89129 Langenau (DE); Michl, Christian, 88489 Wain (DE); Maier, Juergen, 72461 Albstadt (DE); Zillinger, Adrian, 75328 Schoemberg (DE)

(57) **Zusammenfassung**

Die vorliegende Erfindung betrifft ein Verfahren zur Steuerung eines Fahrantriebes (1) einer mobilen Arbeitsmaschine, wobei der Fahrantrieb mit einer Hydropumpe (2) zur Druckmittelversorgung einer mit einem Abtrieb (80) koppelbaren Mehrzahl von Hydromotoren (78) des Fahrantriebes (1) versehen ist, wobei in dem Fahrantrieb die Mehrzahl von Hydromotoren (78) wahlweise in einer seriellen Konfiguration, in einer parallelen Konfiguration oder vorzugsweise auch in einer Kombination dieser zwei Konfigurationen angeordnet werden können, wobei in der seriellen Konfiguration ein Hydromotor der Mehrzahl von Hydromotoren (78) stromabwärts eines anderen Hydromotors der Mehrzahl von Hydromotoren (78) angeordnet ist, wobei in der parallelen Konfiguration die Mehrzahl von Hydromotoren (78) mit dem gleichen durch die Hydropumpe (2) erzeugten Druck (p) versorgt sind; wobei das Verfahren folgende Schritte umfasst:
a. Erfassen eines Beschleunigungsbefehls des Fahrantriebes (1), und/oder Erfassen eines Bremsbefehls des Fahrantriebes (1), und/oder Erfassen des durch die Hydropumpe (2) erzeugten Druckes (p), und/oder Erfassen einer Geschwindigkeit oder einer Beschleunigung der Arbeitsmaschine (1) oder der Räder (80) der Arbeitsmaschine, und/oder Erfassen eines Fahrtrichtungsstatus der Arbeitsmaschine (1), und/oder Erfassen eines Lenkwinkels der Arbeitsmaschine (1);
b. Automatisches Umschalten zwischen der seriellen Konfiguration und der parallelen Konfiguration, wenn mindestens eine der im Schritt a. erfassten Informationen einen Wechsel von der seriellen Konfiguration in die parallele Konfiguration oder einen Wechsel von der parallelen Konfiguration in die serielle Konfiguration mindestens teilweise erfordert.

## Beschreibung

### STAND DER TECHNIK

Es sind hydrostatische Fahrantriebe für mobile Arbeitsmaschinen bekannt, bei denen eine Hydropumpe und ein oder mehrere Hydromotoren in einem geschlossenen hydraulischen Kreis miteinander verbunden sind. Die Hydropumpe wird von einem Verbrennungsmotor - z.B. einem Dieselmotor - angetrieben und die Hydromotoren treiben schließlich die mobile Arbeitsmaschine - z.B. über ein jeweiliges Rad - an.

Die Hydropumpe derartiger Fahrantriebe ist oft in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Antriebsdrehzahl der Hydromotoren bzw. der Räder - also eine Fahrgeschwindigkeit der mobilen Arbeitsmaschine - verstellt werden.

Hydrostatische Axialkolbenpumpen werden u.a. in Fahrantrieben von Baumaschinen eingesetzt. Diese Axialkolbenpumpen werden oft bei Mehrmotoren-Fahrantrieben benutzt.

Hydraulische Mehrmotorenlösungen können entweder in einer seriellen Konfiguration oder in einer parallelen Konfiguration realisiert werden.

Die serielle Konfiguration bietet eine längere Übersetzung und feste Kopplung (Kopplung über Volumenstrom) von mehreren Motoren, wodurch Schlupfeffekte bei niedriger Traktion bei einem Motor vermieden werden können.

Die parallele Kopplung von Motoren (Kopplung über Druck) bietet dagegen eine kürzere Übersetzung, gleichzeitig können auch unterschiedliche Drehzahlen ohne Kavitation/Druckanstieg zwischen den Motoren abgebildet werden (unterschiedliche Drehzahlen bei Kurvenfahrt). Allerdings kann es bei fehlender Traktion zu unkontrolliertem Schlupf an dem betreffenden Motor kommen (fehlende Zugkraft an anderen Motoren). Nachteile können durch zusätzliche hydraulische Komponenten wie Volumenstromteiler oder Nachsaugventile/Überdruckventile ausgeglichen werden, was allerdings zu höheren Kosten und Wirkungsgradeinbußen führt.

Demgegenüber liegt der Erfindung die Aufgabe zugrunde, ein Verfahren herzustellen, das die oben genannten Nachteile beseitigt.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Fig. 1 zeigt einen hydraulischen Schaltplan eines hydrostatischen Fahrantriebes gemäß dem Stand der Technik,
Fig. 2 zeigt einen hydraulischen Schaltplan eines hydrostatischen Fahrantriebes gemäß einem Ausführungsbeispiel der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

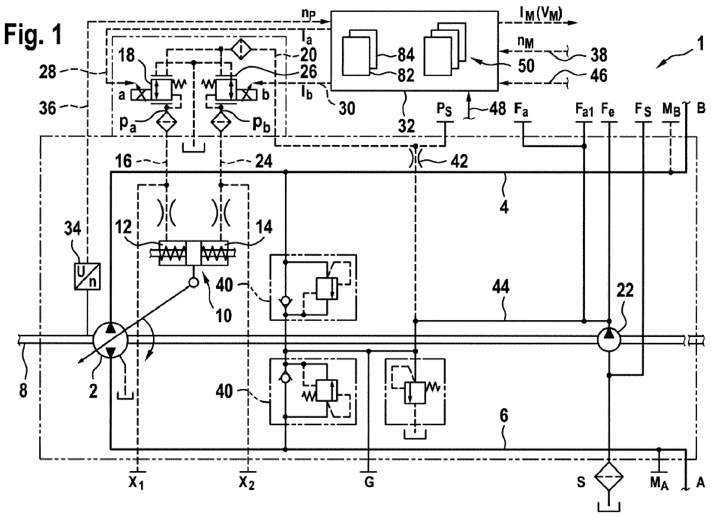

Gemäß Figur 1 hat ein hydrostatischer Fahrantrieb 1 eine Hydropumpe 2, die in geschlossenem hydraulischen Kreislauf über die Arbeitsleitungen 4 und 6 mit mindestens einem nicht in Figur 1 dargestellten Hydromotor zu dessen Druckmittelversorgung fluidisch verbunden ist. Dabei ist die Hydropumpe 2 mit einer Antriebsmaschine (nicht dargestellt) über eine Triebwelle 8 zur Übertragung eines Drehmoments gekoppelt. Die Kopplung ist dabei nicht übersetzt, so dass die Drehzahl der Antriebsmaschine und der Hydropumpe 2 identisch sind.

Die Hydropumpe 2 ist als Axialkolbenpumpe in Schrägscheibenbauweise ausgestaltet und kann in beiden Drehrichtungen und sowohl im Pumpen- als auch im Motorbetrieb betrieben werden. Sie hat ein verstellbares Verdrängungsvolumen V_{P} und eine als doppelt wirkender Hydrozylinder ausgestaltete Verstelleinrichtung 10.

Der Hydrozylinder 10 hat eine erste Zylinderkammer 12 und eine der ersten entgegenwirkende, zweite Zylinderkammer 14. Die erste Zylinderkammer 12 ist über eine erste Stelldruckleitung 16 mit dem Ausgang eines ersten Druckreduzierventils 18 verbunden. Letztgenanntes ist an eine Steuerdruckleitung 20 angeschlossen, die über einen Steuerdruckanschluss pₛ und über eine Speisepumpe 22, die auf der gleichen Triebwelle 8 wie die Hydropumpe 2 sitzt, mit Steuerdruckmittel versorgbar ist.

In gleicher Weise ist die zweite Zylinderkammer 14 über eine zweite Stelldruckleitung 24 mit einem zweiten Druckreduzierventil 26 verbunden, welches an die Steuerdruckleitung 20 angeschlossen ist. Die Druckreduzierventile 18, 26 sind elektromagnetisch betätigbar, wobei der jeweils in der Stelldruckleitung 16 bzw. 24 resultierende Stelldruck pₐ bzw. p_{b} gemäß einer Ventilkennlinie proportional zu einem Ansteuerstrom Iₐ bzw. I_{b} des Elektromagnets a bzw. b ist. Über die elektromagnetische Betätigung der Druckreduzierventile 18, 26 können somit über die Vorgabe der Ansteuerströme Iₐ, I_{b} die Stelldrücke pₐ, p_{b} der Zylinderkammern 12, 14 gesteuert werden. Zu diesem Zweck sind die Elektromagnete a, b der Druckreduzierventile 18, 26 über eine jeweilige Signalleitung 28 bzw. 30 mit einer elektronischen Steuereinheit 32 signalverbunden.

Des Weiteren hat der hydrostatische Fahrantrieb 1 eine Drehzahlerfassungseinheit 34, über die eine Drehzahl np der Hydropumpe 2 erfassbar und über eine Signalleitung 36 an die elektronische Steuereinheit 32 übermittelbar ist. Ebenso hat der Fahrantrieb 1 eine Drehzahlerfassungseinheit (nicht dargestellt), über die die Drehzahl n_{M} des Hydromotors erfassbar und über die Signalleitung 38 an die elektronische Steuereinheit 32 übermittelbar ist.

Zur sicherheitsrelevanten Druckabsicherung der Arbeitsleitungen 4, 6 gegen Überlast hat der hydrostatische Fahrantrieb 1 jeweils ein Druckbegrenzungsventil 40, das mit der jeweiligen Arbeitsleitung 4, 6 verbunden ist. Beide Druckbegrenzungsventile 40 sind mit ihren Ausgängen an eine Speisedruckleitung 44 angeschlossen, die mit der Speisepumpe 22 verbunden ist. Die Speisedruckleitung 44 ist über eine Drossel 42 mit der Steuerdruckleitung 20 fluidisch verbunden. Im Falle des Ansprechens der Druckbegrenzungsventile wird somit Druckmittel in die Speisedruckleitung 44 entspannt, wodurch energetische Verluste geringer sind, als wenn die Entspannung zum Tank T hin geschähe. Die Druckbegrenzungsventile 40 weisen jeweils eine Speise- oder Nachsaugfunktion in Form eines Rückschlagventils auf.

Der hydrostatische Fahrantrieb 1 kann sowohl im Zugbetrieb als auch im Schlepp- oder Bremsbetrieb betrieben werden. Im Zugbetrieb arbeitet die Hydropumpe 2 im Pumpenbetrieb, im Bremsbetrieb arbeitet sie im Motorbetrieb. Zudem ist die Hydropumpe 2 reversierbar, das heißt, ihr Verdrängungsvolumen V_{P} ist über die Verstelleinrichtung 10 beidseitig einer Neutralstellung mit Nullvolumen V_{P} = 0 verstellbar. Dadurch ist bei gleichbleibender Drehrichtung der Triebwelle 8 und der Antriebsmaschine (Dieselmotor) eine Fahrtrichtungsumkehr möglich.

Die elektronische Steuereinheit 32 ist über eine Signalleitung 46 mit einer Bedienerschnittstelle in Form eines Fahrpedals (nicht dargestellt) verbunden. Über das Fahrpedal wird dabei von einem Fahrer eine Geschwindigkeitsanforderung an die elektronische Steuereinheit 32 übermittelt. Diese kann sowohl die Rückwärtsfahrt als auch die Vorwärtsfahrt betreffen. Wird das Fahrpedal betätigt, so entspricht das dem Zug- oder Pumpenbetrieb der Hydropumpe 2, wird das Fahrpedal hingegen zurückgenommen, entspricht dies dem Brems- oder Motorbetrieb der Hydropumpe 2. Auch die Betätigung einer Fahrbremse (nicht dargestellt) entspricht dem Brems- oder Motorbetrieb der Hydropumpe 2.

Die Steuereinheit ist derart ausgestaltet, dass sie anhand der genannten Betätigung den entsprechenden Betrieb ermitteln kann. Zur Auswahl einer Fahrtrichtung weist der hydrostatische Fahrantrieb 1 zudem einen betätigbaren Fahrtrichtungsschalter (nicht dargestellt) auf, der über eine Signalleitung 48 mit der elektronischen Steuereinheit 32 signalverbunden ist. In Abhängigkeit seiner Stellung erfolgt die Ansteuerung der Hydropumpe 2 in ihrem reversierten oder nicht reversierten Verstellbereich, also diesseits oder jenseits der Neutralstellung des Hubvolumens der Hydropumpe 2. Für die weitere Betrachtung seien folgende Fahrzustände definiert:
Vorwärtsfahrt, Zugbetrieb: Druckbeaufschlagung der ersten Zylinderkammer 12 über die erste Stelldruckleitung 16 und das erste Druckreduzierventil 18 mit dem ersten Stellruck pₐ durch Ansteuern des ersten Druckreduzierventils 18 mit dem Ansteuerstrom Iₐ über die Steuereinheit 32 über die erste Signalleitung 28.

Vorwärtsfahrt, Bremsbetrieb: Druckbeaufschlagung der zweiten Zylinderkammer 14 über die zweite Stelldruckleitung 24 und das zweite Druckreduzierventil 26 mit dem zweiten Stelldruck p_{b} durch Ansteuern des zweiten Druckreduzierventils 26 mit dem Ansteuerstrom I_{b} über die Steuereinheit 32 über die Signalleitung 30.

Rückwärtsfahrt, Zugbetrieb: Druckbeaufschlagung der zweiten Zylinderkammer 14 über die Kette 24, 26, 30, 32.

Rückwärtsfahrt, Bremsbetrieb: Druckbeaufschlagung der ersten Zylinderkammer 12 über die Kette 16, 18, 28, 32.

In beiden gezeigten Ausführungsbeispielen eines hydrostatischen Fahrantriebs 1 ist die Hydropumpe 2 derart ausgestaltet, dass der Druck p, der in der hochdruckführenden der Arbeitsleitungen 4, 6 ansteht, dem dann wirksamen Stelldruck pₐ oder p_{b} entgegenwirkt und in Richtung seiner eigenen Verringerung wirksam ist. Hierzu weist die Hydropumpe 2 eine konstruktiv realisierte Regelschleife auf.

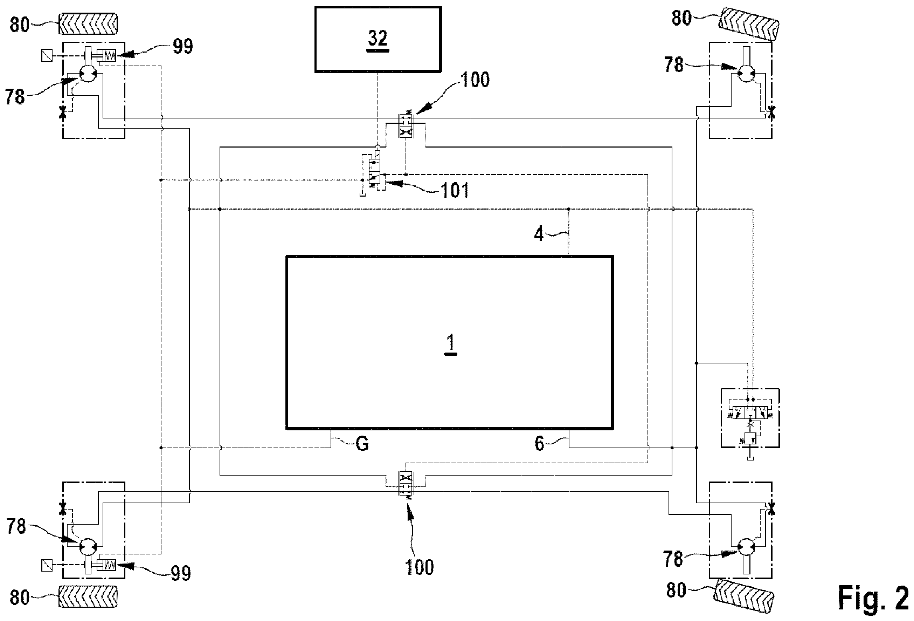

Der Fahrantrieb von Figur 1 ist aus dem Stand der Technik bekannt. Wie in Figur 2 dargestellt ist, wird die Hydropumpe 2 mit einer Mehrzahl von Hydromotoren 78 hydraulisch verbunden. In der dargestellten Ausführungsform ist die Mehrzahl von Hydromotoren 78 an jeweils verschiedenen Rädern 80 der Arbeitsmaschine angeordnet. Jeder Hydromotor 78 ist konfiguriert, eine Drehbewegung an das jeweilige Rad 80 der Arbeitsmaschine zu übertragen. In diesem Beispiel hat die Arbeitsmaschine vier Räder und deshalb ist die Zahl der Hydromotoren 78 gleich vier. Allerdings kann die vorliegende Erfindung bei einer Arbeitsmaschine mir einer anderen Anzahl von Rädern angewendet werden.

Die Arbeitsleitung 4 ist direkt mit den zwei vorderen Hydromotoren verbunden und kann über zwei Proportionalventile 100 mit den hinteren Hydromotoren verbindet werden. Die Proportionalventile 100 haben jeweils zwei Schaltpositionen und jedes Proportionalventil 100 kann zwischen diesen zwei Positionen umschalten. Jedes Proportionalventil 100 ist für die Steuerung der Verbindung der Hydromotoren auf einer Seite der Arbeitsmaschine zuständig.

In einer ersten Position (die in Figur 2 dargestellt ist) ermöglichen die Proportionalventile 100, dass die Arbeitsleitung 4 nur mit den vorderen Hydromotoren 78 hydraulisch verbunden ist.

Die Proportionalventile 100 verhindern in der dargestellten Position die Verbindung mit der Arbeitsleitung 4. In diesem Zustand sind deswegen die vorderen Hydromotoren 78 parallel angeordnet und die hinteren Hydromotoren sind seriell mit dem jeweiligen vorderen Hydromotor hydraulisch verbunden. Mit "seriell" ist damit gemeint, dass ein Hydromotor stromabwärts eines anderen Hydromotors angeordnet ist, sodass der gleiche Volumenstrom durch die zwei Hydromotoren fließt. Dieser Volumenstrom wird dann von den hinteren Hydromotoren in die Arbeitsleitung 6 wieder zugeführt, sodass die Hydropumpe 2 diesen Volumenstrom wieder mit Druck beaufschlagen kann.

In einer zweiten Position wird das Proportionalventil 100 eine hydraulische Verbindung zwischen der Arbeitsleitung 4 und den hinteren Hydromotoren 78 ermöglichen. Darüber hinaus wird das Proportionalventil 100 in dieser Position die serielle Verbindung zwischen dem vorderen und dem hinteren Hydromotor 78 unterbrechen. Insbesondere wird der Abfluss von dem vorderen Motor direkt in die Arbeitsleitung 6 zugeführt. In diesem Zustand sind deswegen alle die Hydromotoren 78 in der parallelen Konfiguration angeordnet.

Zwischen der ersten und der zweiten Position können beliebige Positionen des Proportionalventils 100 angefahren werden, sodass ein Teil des Volumenstroms, der aus der Arbeitsleitung 4 fließt, seriell durch einen vorderen und einen hinteren Hydromotor 78 fließen wird und ein Teil des Volumenstroms parallel an den vorderen und an den hinteren Hydromotor zu Verfügung gestellt wird.

In dieser Ausführungsform ist die Position (zwischen den beschriebenen ersten und zweiten Positionen) von jedem Proportionalventil 100 mit einem gleichen Steuerdruck geregelt, der aus einem Druckreduzierventil 101 zugeschickt wird. Das Druckreduzierventil 101 kann auf Basis eines Steuerstroms den Steuerdruck, der für die Position (bzw. die Stellung) der Proportionalventile 100 zuständig ist, kontinuierlich regeln. Aus diesem Grund ist das Ventil 101 mit der Steuereinheit 32 signalverbunden, sodass die Steuereinheit 32 indirekt eine Position der Proportionalventile regeln kann. Es ist dem Fachmann aber klar, dass diese Erfindung auch mit einer direkten Steuerung des Proportionalventils 100 funktionieren kann. Darüber hinaus ist es dem Fachmann klar, dass die beiden Proportionalventile 100 unabhängig voneinander gesteuert werden können.

In diesem Ausführungsbeispiel wird der Steuerdruck, der zu dem Proportionalventil 101 fließt, von der Speisepumpe 22 geliefert. Insbesondere ist an dem Anschluss G, der in Figur 1 dargestellt ist, der gleiche Druck der Speisedruckleitung 44 vorhanden. Der gleiche Druck wird in diesem Ausführungsbeispiel benutzt, um die Vorderbremse 99 der Vorderräder 80 zu steuern. Es ist dem Fachmann aber klar, dass der Steuerdruck aus einer anderen beliebigen Druckquelle kommen kann und dass diese Erfindung nicht auf dieses besondere Beispiel begrenzt ist.

In den folgenden Abschnitten wird das Verfahren zur Steuerung des Fahrantriebes im Detail beschrieben und insbesondere das Verfahren zur Steuerung der Proportionalventile 100.

Insbesondere hat der Erfinder ein Verfahren entwickelt, das ermöglicht, eine optimale hydraulische Verbindung zwischen der Hydropumpe und den Hydromotoren herzustellen.

In dem Verlauf der Beschreibung ist mit "erstem Gang" ein Status gemeint, bei dem die vorderen und die hinteren Hydromotoren in der rein parallelen Konfiguration angeordnet sind. Umgekehrt ist mit "zweitem Gang" ein Status gemeint, bei dem die Hydromotoren in der rein seriellen Konfiguration angeordnet sind.

In einem ersten Schritt wird beobachtet, ob aktuelle Bedingungen einen Wechsel von der seriellen Konfiguration in die parallele Konfiguration oder einen Wechsel von der parallelen Konfiguration in die serielle Konfiguration mindestens teilweise erfordern.

Diese Bedingungen können sehr unterschiedlich sein und diese Erfindung ist nicht auf eine bestimme Art von Bedingung begrenzt.

Eine erste Bedingung kann ein Beschleunigungsbefehl des Fahrantriebes 1 sein, der bei der Bedienerschnittstelle als Wunsch-Beschleunigung, z.B. durch die Betätigung eines Fahrpedals, eingegeben wird und der von der Steuereinheit 32 eingelesen wird. Auf Basis des Fahrerwunsches wird anteilig der serielle Betrieb gesteuert: mit steigender Wunsch-Beschleunigung wird der serielle Betrieb komplett freigegeben. Das bedeutet, dass, wenn die Wunsch-Beschleunigung steigt, die Steuereinheit konfiguriert ist, das Druckreduzierventil 101 so zu kontrollieren, dass der Fahrantrieb 1 von dem ersten Gang in den zweiten Gang allmählich umgeschaltet wird.

Eine zweite vorzugsweise zusätzliche Bedingung kann ein Bremsbefehl des Fahrantriebes 1 sein, der bei der Bedienerschnittstelle als Wunsch-Bremsen, z.B. durch die Betätigung eines Bremspedals, eingegeben wird und der von der Steuereinheit 32 eingelesen wird.

Eine dritte vorzugsweise zusätzliche Bedingung kann der durch die Hydropumpe 2 erzeugte Druck p sein. Auf Basis des hydrostatischen Druckes wird das Druckreduzierventil 101 so kontrolliert, dass zur Schlupfvermeidung der Fahrantrieb anteilig in die serielle Konfiguration gesteuert wird: bei einem hohen Druck wird sich der Fahrantrieb in dem ersten Gang befinden, bei einem niedrigeren Druck wird der Fahrantrieb allmählich in den zweiten Gang umschalten.

Eine vierte vorzugsweise zusätzliche Bedingung kann die aktuelle Geschwindigkeit oder die aktuelle Beschleunigung der Arbeitsmaschine oder der Räder der Arbeitsmaschine sein. In diesem Zusammenhang, wenn z.B. erfasst wird, dass die Geschwindigkeit der Arbeitsmaschine gleich null ist und kein Reversieren der Arbeitsmaschine aktiviert ist, wird der Fahrantrieb von dem zweiten Gang automatisch in den ersten Gang umschalten. Ebenfalls wird in den ersten Gang geschalten wenn erkannt wird, dass eine hohe Zugkraft gefordert ist. Diese Bedingung kann z.B. erkannt werden, wenn die Geschwindigkeit eine Schwelle unterschreitet und gleichzeitig der Druck über einer Schwelle liegt. Die Bedingung, dass kein Reversieren gerade aktiviert ist, kann durch die Steuereinheit von dem betätigbaren Fahrtrichtungsschalter erfasst werden.

Gemäß einem Ausführungsbeispiel der vorliegenden Erfindung ist mindestens ein Vorderrad und mindestens ein Hinterrad mit einem Drehzahlsensor versehen. Aus der Drehzahl der verschiedenen Räder wird ein Schlupfzustand ermittelt. Wenn erkannt wird, dass Schlupfen gerade passiert oder sehr wahrscheinlich passieren wird, wird automatisch ein Wechsel von der parallelen Konfiguration in die serielle Konfiguration mindestens teilweise ausgeführt.

Alternativ wird gemäß einem weiteren Ausführungsbeispiel der vorliegenden Erfindung die Möglichkeit gegeben. den Schlupfzustand an Hand des Speisedrucks zu bestimmen. Der Grund ist, dass ein niedrigerer Druck auf eine mögliche Schlupfsituation hindeuten kann. Wenn erkannt wird, dass Schlupfen gerade passiert oder sehr wahrscheinlich passieren wird (bei einem niedrigen Druckwert des Speisedruckes), wird automatisch ein Wechsel von der parallelen Konfiguration in die serielle Konfiguration mindestens teilweise ausgeführt.

Eine fünfte vorzugsweise zusätzliche Bedingung kann ein Lenkwinkel der Arbeitsmaschine 1 sein. In diesem Fall, wenn erfasst wird, dass der Lenkwinkel einen vorgegebenen Wert überschritten hat, um zu hohe Drücke zu verhindern, sodass die Komponenten des Fahrantriebes tatsächlich geschützt werden können, wird der Fahrantrieb von dem zweiten Gang automatisch in den ersten Gang umschalten

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Steuerung eines Fahrantriebes (1) einer mobilen Arbeitsmaschine, wobei der Fahrantrieb mit einer Hydropumpe (2) zur Druckmittelversorgung einer mit einem Abtrieb (80) koppelbaren Mehrzahl von Hydromotoren (78) des Fahrantriebes (1) versehen ist, wobei in dem Fahrantrieb die Mehrzahl von Hydromotoren (78) wahlweise in einer seriellen Konfiguration, in einer parallelen Konfiguration oder vorzugsweise auch in einer Kombination dieser zwei Konfigurationen angeordnet werden können, wobei in der seriellen Konfiguration ein Hydromotor der Mehrzahl von Hydromotoren (78) stromabwärts eines anderen Hydromotors der Mehrzahl von Hydromotoren (78) angeordnet ist, wobei in der parallelen Konfiguration die Mehrzahl von Hydromotoren (78) mit dem gleichen durch die Hydropumpe (2) erzeugten Druck (p) versorgt sind;
**dadurch gekennzeichnet, dass** das Verfahren folgende Schritte umfasst:
a. Erfassen eines Beschleunigungsbefehls des Fahrantriebes (1), und/oder erfassen eines Bremsbefehls des Fahrantriebes (1), und/oder Erfassern des durch die Hydropumpe (2) erzeugten Druckes (p), und/oder Erfassen einer Geschwindigkeit oder einer Beschleunigung der Arbeitsmaschine (1) oder der Räder (80) der Arbeitsmaschine, und/oder Erfassen eines Fahrtrichtungsstatus der Arbeitsmaschine (1), und/oder Erfassen eines Lenkwinkels der Arbeitsmaschine (1);
b. Automatisches Umschalten zwischen der seriellen Konfiguration und der parallelen Konfiguration, wenn mindestens eine der im Schritt a. erfassten Informationen einen Wechsel von der seriellen Konfiguration in die parallele Konfiguration oder einen Wechsel von der parallelen Konfiguration in die serielle Konfiguration mindestens teilweise erfordert.

2. Verfahren nach Anspruch 1, wobei die Mehrzahl von Hydromotoren (78) an jeweils verschiedenen Rädern (80) der Arbeitsmaschine angeordnet sind, und wobei jeder Hydromotor (78) konfiguriert ist, eine Drehbewegung an das jeweilige Rad (80) zu übertragen.

3. Verfahren nach Anspruch 2, wobei mindestens ein Vorderrad und mindestens ein Hinterrad mit einem Drehzahlsensor angeordnet sind, und wobei aus der Drehzahl der verschiedenen Räder (80) ein Schlupfzustand ermittelt wird und wobei, wenn erkannt wird, dass Schlupfen passiert, automatisch ein Wechsel von der parallelen Konfiguration in die serielle Konfiguration mindestens teilweise ausgeführt wird.

4. Verfahren nach Anspruch 2, wobei in dem Schritt a. ein Schlupfzustand auf Basis eines Speisedruckes ermittelt wird und wobei, wenn erkannt wird, dass Schlupfen passiert, automatisch ein Wechsel von der parallelen Konfiguration in die serielle Konfiguration mindestens teilweise ausgeführt wird

5. Verfahren nach einem der Ansprüche 1 bis 4, wobei das Umschalten zwischen der seriellen Konfiguration und der parallelen Konfiguration der Hydromotoren mittels einer Betätigung mindestens eines Proportionalventiles (100) ausgeführt wird.

6. Verfahren nach Anspruch 4, wobei das mindestens ein Proportionalventil (100) konfiguriert ist, eine Zwischenkonfiguration zu ermöglichen, bei der die Mehrzahl von Hydromotoren (78) sich teilweise in der seriellen Konfiguration und teilweise in der parallelen Konfiguration befinden.

7. Verfahren nach Anspruch 6, wobei der Fahrantrieb mindestens vier Hydromotoren (78) umfasst, wobei mindestens zwei Hydromotoren an einer ersten Seite der Arbeitsmaschine und mindestens zwei Hydromotoren an einer zweiten Seite der Arbeitsmaschine angeordnet sind, wobei der Fahrantrieb zwei der Proportionalventile (100) umfasst, wobei jedes Proportionalventil die Verbindung zwischen den Hydromotoren (78), die an der gleichen Seite der Arbeitsmaschine angeordnet sind, steuert.

8. Verfahren nach Anspruch 7, wobei die zwei Proportionalventile unabhängig voneinander gesteuert werden.

9. Verfahren nach einem der Ansprüche 5 bis 8, wobei das Proportionalventil vorkalibriert ist.

10. Verfahren nach einem der Ansprüche 1 bis 9, wobei der durch die Hydropumpe (2) erzeugte Druck (p) mittels Beeinflussung eines Stelldrucks (pa, pb) regelbar ist.
